# EUROPEAN PATENT APPLICATION

(11) **EP 4 501 697 A1**
(43) Date of publication of application: **05.02.2025**
(21) Application number: 24184794.6
(22) Date of filing: 26.06.2024
(51) Int. Cl.: B60L 53/14, B60L 53/30, B60L 53/31, B60L 53/62, B60L 53/63, B60L 53/66, B60L 58/12, H02J 3/14, H02J 3/32, H02J 7/00, B60L 3/12

(54) **LOCAL DYNAMIC LOAD BALANCING FOR EV CHARGING WITH POWER LINE COMMUNICATION**

(30) Priority: 31.07.2023 US 202363516539 P; 20.10.2023 US 202318491281
(71) Applicant: Computime Ltd, Shatin, New Territories (HK)
(72) Inventor: Cheung, Kam Tim, Shatin (HK); Chan, Leung Yin, Shatin (HK); Tam, Pui Keung, Shatin (HK)
(74) Representative: Mollekopf, Gerd Willi

(57) **Abstract**

A power line communication device measures a total current flowing through one or more power lines providing power to EV chargers. The device establishes communication with at least one of the EV chargers using the one or more power lines as the communications medium. The device further communicates power management information to the EV chargers. When the device receives a request from the EV chargers, it calculates a current for each of the EV chargers from the total current, the preset maximum current, or both the total current and the preset maximum current, and communicates a calculated current to each of the EV chargers. Alternatively, the device can provide the total current to one of the EV chargers that acts as a power manager and communicates power management information to the other EV chargers using the one or more power lines as the communications medium.

## Description

### TECHNICAL FIELD

This invention relates to load balancing for electric vehicle (EV) charging with power line communication.

### BACKGROUND OF THE RELATED ART

Installing EV chargers in a parking lot or a parking garage takes a large-scale effort. It requires not only connecting the power lines but also setting up the communication between the EV chargers and the cloud.

For wireline communication, ethernet cables or RS485 cables are usually installed to connect the EV chargers to the cloud via a gateway. For wireless communication, a WiFi (IEEE 802.11) or cellular network is usually installed to connect the EV chargers to the cloud. Both methods require electronics engineers in order to install and set up the EV chargers. This lengthens the installation time and increases the installation cost.

### SUMMARY

The invention is defined in the independent claims. Particular embodiments are set out in the dependent claims.

According to the invention a system for communicating the real-time current available to electric vehicle (EV) chargers is provided, the system comprising: a power line communication device that measures a total current flowing through one or more power lines providing power to *m* EV chargers and establishes communications with the one or more of the *m* EV chargers using the one or more power lines as the communications medium.

Preferably the power line communication device further includes a preset maximum current for the one or more power lines.

Preferably the power line communication device establishes communication with each of *n* chargers of the *m* EV chargers, where *n* ≤ *m,*

Preferably the power line communication device further receives a request for power from the *n* chargers; the power line communication device calculates a current for each of the *n* chargers from the total current, the preset maximum current, or both the total current and the preset maximum current; and the power line communication device communicates a calculated current to each of the *n* chargers.

Preferably the power line communication device calculates a current for each of the *n* chargers based on a first-in, first-charged principle.

Preferably the power line communication device calculates a current for each of the *n* chargers based on a phase aware algorithm.

Preferably the power line communication device calculates a current for each of the *n* chargers by evenly dividing the total current among the *n* chargers.

Preferably the system further comprises a power managing EV charger, wherein the power managing EV charger is one of the *m* EV chargers, the power line communication device communicates the total current, the preset maximum current, or both the total current and the preset maximum current to the power managing EV charger, the power managing EV charger establishes communications with each of *n* chargers of the *m-1* chargers, where *n* ≤ *m-1,* using the one or more power lines as the communications medium, the power managing EV charger further receives a request for power from the *n* chargers, the power managing EV charger calculates a current for each of the *n* chargers and the power managing EV charger from the total current, the preset maximum current, or both the total current and the preset maximum current, and the power managing EV charger communicates a calculated current to each of the *n* chargers.

Preferably the power managing EV charger calculates a current for each of the *n* chargers based on a first-in, first-charged principle.

Preferably the power managing EV charger calculates a current for each of the *n* chargers based on a phase aware algorithm.

Preferably the power managing EV charger calculates a current for each of the *n* chargers by evenly dividing the total current among the n chargers.

Further according to the invention a method for communicating the real-time current available to electric vehicle (EV) chargers is provided, the method comprising: measuring a total current flowing through one or more power lines providing power to *m* EV chargers using a power line communication device; and establishing communications with the one or more of the *m* EV chargers using the one or more power lines as the communications medium using the power line communication device.

In the method preferably the power line communication device establishes communication with each *of n* chargers of the *m* EV chargers, where *n* ≤ *m,* the power line communication device further receives a request for power from the *n* chargers; the power line communication device calculates a current for each of the *n* chargers from the total current, the preset maximum current, or both the total current and the preset maximum current; and the power line communication device communicates a calculated current to each of the n chargers.

Preferably in the method the power line communication device calculates a current for each of the *n* chargers based on a first-in, first-charged principle.

Preferably in the method the power line communication device calculates a current for each of the *n* chargers based on a phase aware algorithm.

Preferably in the method the power line communication device calculates a current for each of the *n* chargers by evenly dividing the total current among the *n* chargers.

Preferably in the method the *m* EV chargers include a power managing EV charger; the power line communication device communicates the total current, a preset maximum current, or both the total current and the preset maximum current to the power managing EV charger; the power managing EV charger establishes communications with each *of n* chargers of the **m-1** EV chargers, where *n* ≤ *m-1,* using the one or more power lines as the communications medium; the power managing EV charger further receives a request for power from the n chargers; the power managing EV charger calculates a current for each of the *n* chargers and the power managing EV charger from the total current, the preset maximum current, or both the total current and the preset maximum current; and the power managing EV charger communicates a calculated current to each of the *n* chargers.

Preferably in the method the power managing EV charger calculates a current for each of the *n* chargers based on a first-in, first-charged principle.

Preferably in the method the power managing EV charger calculates a current for each of the *n* chargers based on a phase aware algorithm.

Preferably in the method the power managing EV charger calculates a current for each of the *n* chargers by evenly dividing the total current among the *n* chargers.

Further a computer program product is provided, comprising a non-transitory tangible computer-readable storage medium whose contents cause a processor to perform a method for communicating the real-time current available to electric vehicle (EV) chargers, comprising: providing a system, wherein the system comprises one or more distinct software modules, and wherein the distinct software modules comprise a measurement module and a communications module; measuring a total current flowing through one or more power lines providing power to *m* EV chargers using the measurement module; and establishing communications with the one or more of the *m* EV chargers using the one or more power lines as the communications medium using the communications module.

### BRIEF DESCRIPTION OF THE DRAWINGS

The skilled artisan will understand that the drawings, described below, are for illustration purposes only. The drawings are not intended to limit the scope of the present teachings in any way.
- Figure 1: is a block diagram that illustrates a computer system, upon which embodiments of the present teachings may be implemented.
- Figure 2: is an exemplary diagram showing a static load balancing method in a fully occupied parking lot.
- Figure 3: is an exemplary diagram showing a static load balancing method in a partially occupied parking lot.
- Figure 4: is an exemplary diagram showing a dynamic load balancing method with WiFi communication when there are two charging cars.
- Figure 5: is an exemplary diagram showing a dynamic load balancing method with WiFi communication when there are four charging cars
- Figure 6: is an exemplary diagram showing a dynamic load balancing method with WiFi communication when there are three charging cars.
- Figure 7: is an exemplary diagram showing a dynamic load balancing method with power line communication when there are two charging cars.
- Figure 8: is an exemplary diagram showing a dynamic load balancing method with power line communication when there are four charging cars.
- Figure 9: is an exemplary diagram showing a dynamic load balancing method with power line communication when there are three charging cars.
- Figure 10: is a flowchart showing a method for communicating the real-time current available to EV chargers.
- Figure 11: is a schematic diagram of a system that includes one or more distinct software modules and that performs a method for communicating the real-time current available to EV chargers.

Before embodiments of the present teachings are described in detail, one skilled in the art will appreciate that the present teachings are not limited in their application to the details of construction, the arrangements of components, and the arrangement of steps set forth in the following detailed description or illustrated in the drawings. Also, it is to be understood that the phraseology and terminology used herein is for the purpose of description and should not be regarded as limiting.

### DETAILED DESCRIPTION

### COMPUTER-IMPLEMENTED SYSTEM

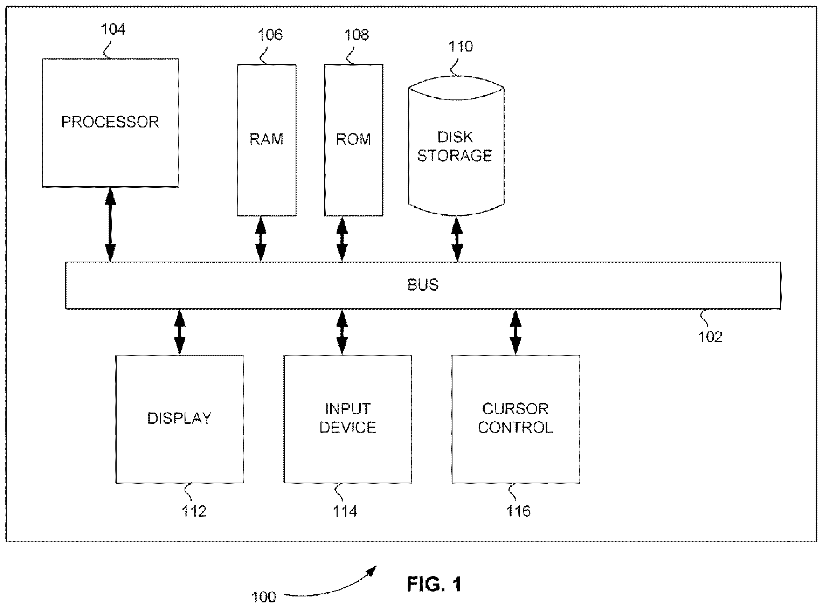

Figure 1 is a block diagram that illustrates a computer system 100, upon which embodiments of the present teachings may be implemented. Computer system 100 includes a bus 102 or other communication mechanism for communicating information, and a processor 104 coupled with bus 102 for processing information. Computer system 100 also includes a memory 106, which can be a random-access memory (RAM) or other dynamic storage device, coupled to bus 102 for storing instructions to be executed by processor 104. Memory 106 also may be used for storing temporary variables or other intermediate information during execution of instructions to be executed by processor 104. Computer system 100 further includes a read only memory (ROM) 108 or other static storage device coupled to bus 102 for storing static information and instructions for processor 104. A storage device 110, such as a magnetic disk or optical disk, is provided and coupled to bus 102 for storing information and instructions.

Computer system 100 may be coupled via bus 102 to a display 112, such as a cathode ray tube (CRT) or liquid crystal display (LCD), for displaying information to a computer user. An input device 114, including alphanumeric and other keys, is coupled to bus 102 for communicating information and command selections to processor 104. Another type of user input device is cursor control 116, such as a mouse, a trackball or cursor direction keys for communicating direction information and command selections to processor 104 and for controlling cursor movement on display 112.

A computer system 100 can perform the present teachings. Consistent with certain implementations of the present teachings, results are provided by computer system 100 in response to processor 104 executing one or more sequences of one or more instructions contained in memory 106. Such instructions may be read into memory 106 from another computer-readable medium, such as storage device 110. Execution of the sequences of instructions contained in memory 106 causes processor 104 to perform the process described herein.

Alternatively, hard-wired circuitry may be used in place of or in combination with software instructions to implement the present teachings. For example, the present teachings may also be implemented with programmable artificial intelligence (AI) chips with only the encoder neural network programmed - to allow for performance and decreased cost. Thus, implementations of the present teachings are not limited to any specific combination of hardware circuitry and software.

The term "computer-readable medium" or "computer program product" as used herein refers to any media that participates in providing instructions to processor 104 for execution. The terms "computer-readable medium" and "computer program product" are used interchangeably throughout this written description. Such a medium may take many forms, including but not limited to, non-volatile media and volatile media. Non-volatile media includes, for example, optical or magnetic disks, such as storage device 110. Volatile media includes dynamic memory, such as memory 106.

Common forms of computer-readable media include, for example, a floppy disk, a flexible disk, hard disk, magnetic tape, or any other magnetic medium, a CD-ROM, digital video disc (DVD), a Blu-ray Disc, any other optical medium, a thumb drive, a memory card, a RAM, PROM, and EPROM, a FLASH-EPROM, any other memory chip or cartridge, or any other tangible medium from which a computer can read.

Various forms of computer readable media may be involved in carrying one or more sequences of one or more instructions to processor 104 for execution. For example, the instructions may initially be carried on the magnetic disk of a remote computer. The remote computer can load the instructions into its dynamic memory and send the instructions over a telephone line using a modem. A modem local to computer system 100 can receive the data on the telephone line and use an infra-red transmitter to convert the data to an infra-red signal. An infra-red detector coupled to bus 102 can receive the data carried in the infra-red signal and place the data on bus 102. Bus 102 carries the data to memory 106, from which processor 104 retrieves and executes the instructions. The instructions received by memory 106 may optionally be stored on storage device 110 either before or after execution by processor 104.

In accordance with an embodiment, instructions configured to be executed by a processor to perform a method are stored on a computer-readable medium. The computer-readable medium can be a device that stores digital information. The computer-readable medium is accessed by a processor suitable for executing instructions configured to be executed.

The following descriptions of various implementations of the present teachings have been presented for purposes of illustration and description. It is not exhaustive and does not limit the present teachings to the precise form disclosed. Modifications and variations are possible in light of the above teachings or may be acquired from practicing of the present teachings. Additionally, the described implementation includes software but the present teachings may be implemented as a combination of hardware and software or in hardware alone. The present teachings may be implemented with both object-oriented and non-object-oriented programming systems.

### LOCAL DYNAMIC LOAD BALANCING FOR EV CHARGING WITH POWER

### LINE COMMUNICATION

As described above, installing EV chargers in a parking lot or a parking garage takes a large-scale effort. It requires not only connecting the power lines but also setting up the communication between the EV chargers and the cloud.

Each building or charging location has a different and limited amount of electrical power for EV charging. Each building or charging location can also have a different number of EV chargers. In the following non-limiting example, there are five EV chargers installed in a parking lot, the maximum capacity of the power assigned to these EV chargers is 100 amperes (A).

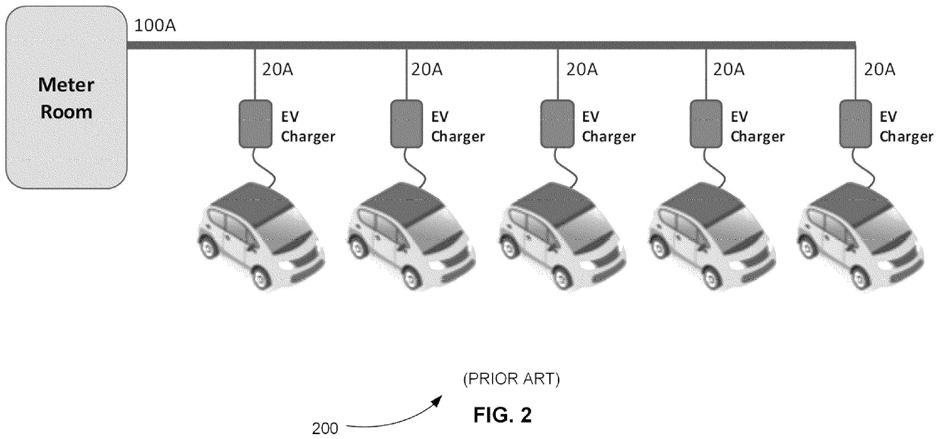

Figure 2 is an exemplary diagram 200 showing a static load balancing method in a fully occupied parking lot. Each EV charger receives the same and fixed amount of electricity, 20A, which is supplied to each EV charger. When there are five charging cars, each charging car is allocated with 20A, with the available power evenly distributed.

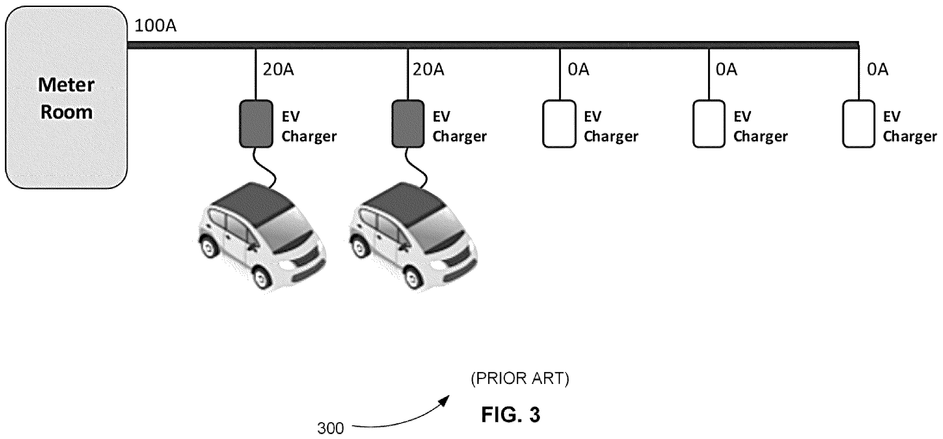

Figure 3 is an exemplary diagram 300 showing a static load balancing method in a partially occupied parking lot. Each EV charger receives the same and fixed amount of electricity. For example, 20A is supplied to each EV charger. When there are two charging cars, three EV chargers are left idle. Each charging car is allocated with 20A and 60A is left unused. Thus, the available power is not optimally distributed.

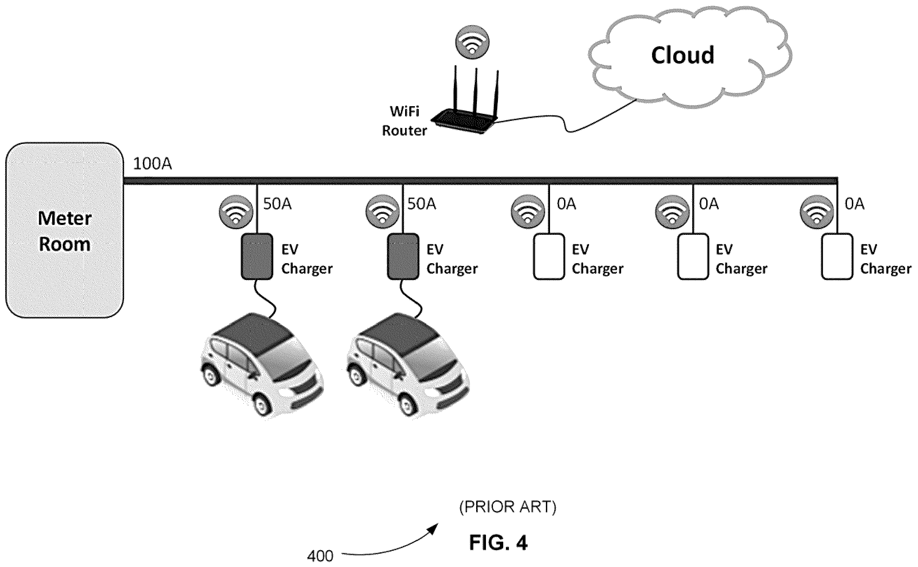

Figure 4 is an exemplary diagram 400 showing a dynamic load balancing method with WiFi communication when there are two charging cars. The EV chargers that possess a WiFi communication capability can connect to a WiFi network easily with a WiFi router. All EV chargers are communicating to the cloud or computer servers with the WiFi communication network. If, alternatively, the EV chargers possess cellular communication capability, they can be connected to the cloud directly without a router. A central management system in the cloud communicates with all the EV chargers and is notified that there are two charging cars and three idle EV chargers. Then, the central management system issues a message to the two EV chargers with charging cars. The maximum assigned current is 100A. This current is dynamically allocated to the two charging cars, with each charging car being allocated 50A. The available power is then optimally distributed.

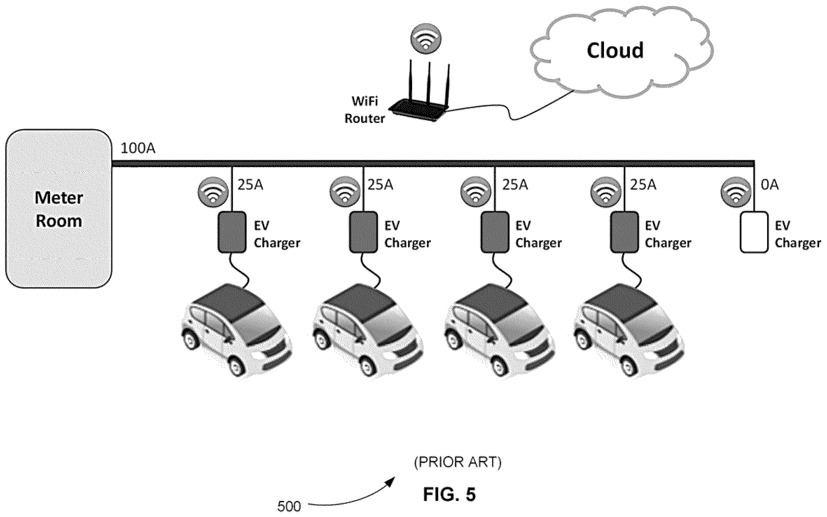

Figure 5 is an exemplary diagram 500 showing a dynamic load balancing method with WiFi communication when there are four charging cars. When two cars are being charged and two more cars arrive, the associated EV chargers notify the central management system in the cloud. Then, the central management system issues a message to the four EV chargers with charging cars. The four charging cars are then allocated with 25A individually.

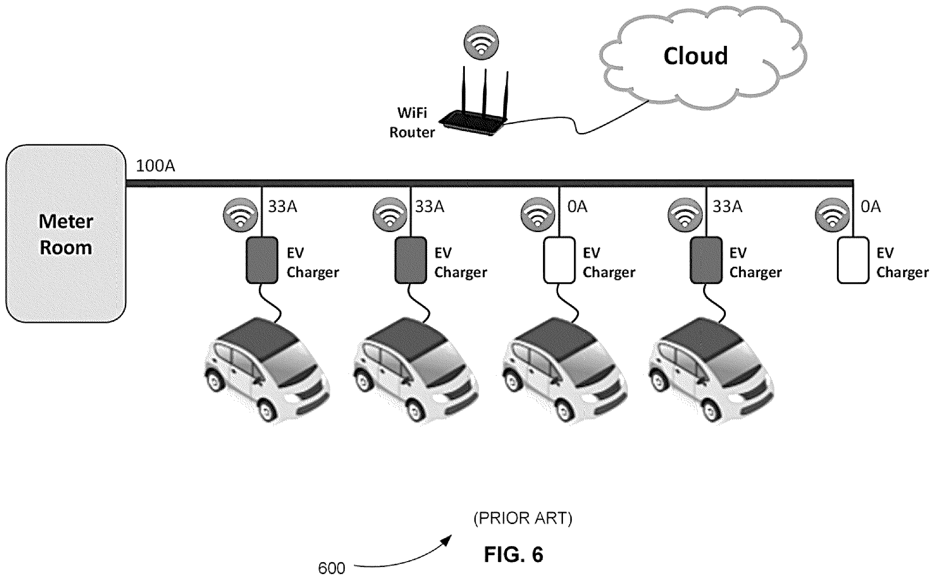

Figure 6 is an exemplary diagram 600 showing a dynamic load balancing method with WiFi communication when there are three charging cars. When a car is completely charged, the associated EV charger notifies the central management system in the cloud. Then, the central management system issues a message to the three EV chargers with the remaining charging cars. Then, 33A is dynamically allocated to the remaining three charging cars. The disadvantage of this method is that if the Internet or the cloud goes down, there will be no dynamic load balancing.

Dynamic load balancing may be provided using power line communication. Power line communication uses the power lines as the medium for sending and retrieving information. There is no need to lay new lines of communication. It requires only installing the power lines by certified electricians. It reduces the installation time and reduces the installation cost while providing reliable and robust networking. The EV chargers that possess power line communication capability connect to the power line communication network as easily as they connect to the power of the power lines.

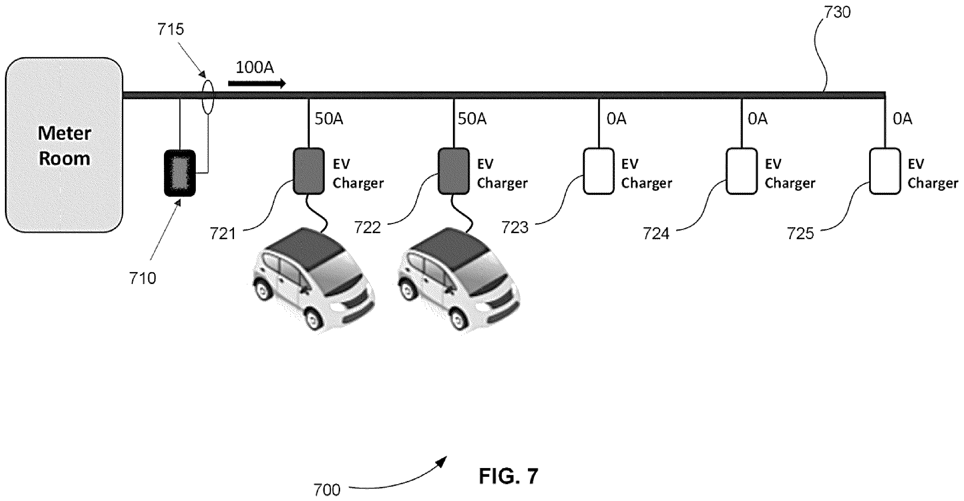

Figure 7 is an exemplary diagram 700 showing a dynamic load balancing method with power line communication when there are two charging cars. Power line communication module or device 710 measures the real-time total current flowing from the grid to the EV chargers 721-725, using, for example, a current transformer meter 715. The maximum total current that can be supplied to EV chargers 721-725 connected to the power lines is pre-set in the power line communication device. Power line communication device 710 acts as a power manager that can intelligently allocate the available power based on the real-time needs of vehicles. This method supports more EVs and allocates power dynamically to each EV in the most efficient way without connecting to the cloud. Power line communication device 710 can include a processor, controller, or computer system, such as the computer system of Figure 1.

EV chargers 721-725 are communicating with power line communication device 710 over power line 730. Power line communication device 710 is notified that there are two charging cars and three idle EV chargers 723-725. Then, power line communication device 710 issues a message to EV chargers 721-722 with charging cars. The maximum assigned current is 100A, the two charging cars are allocated with 50A individually. The available power is optimally distributed.

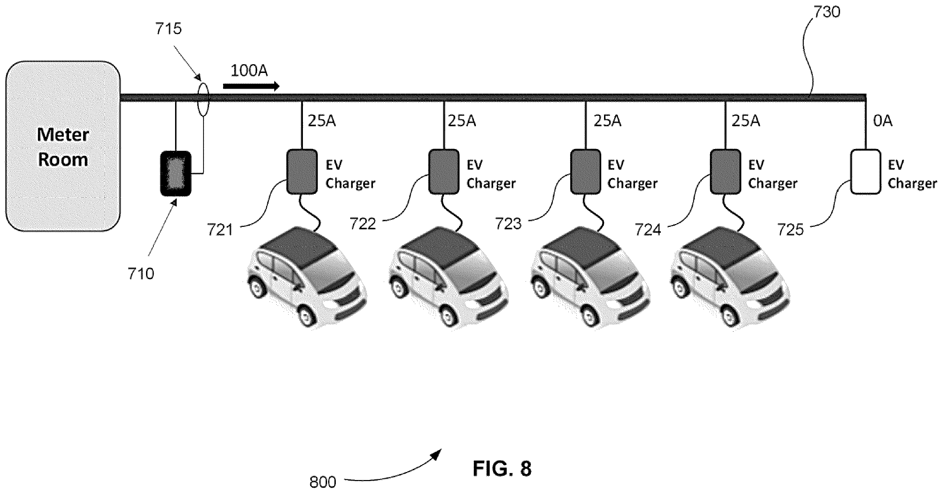

Figure 8 is an exemplary diagram showing a dynamic load balancing method with power line communication when there are four charging cars. When two cars are being charged, two more cars arrive and the associated EV chargers 723-724 notify power line communication device 710. Then, power line communication device 710 issues a message to the four EV chargers 721-724 with charging cars. The four charging cars are allocated with 25A individually. In other words, the message instructs EV chargers 721-722 to decrease their current draw from 50A to 25A and instructs EV chargers 723-724 to increase their current from 0A to 25A.

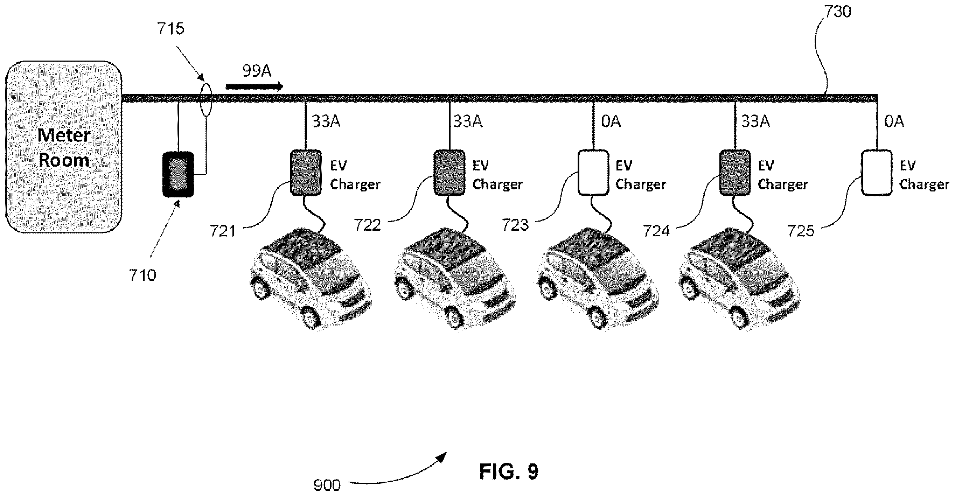

Figure 9 is an exemplary diagram showing a dynamic load balancing method with power line communication when there are three charging cars. When a car is completely charged, the associated EV charger 723 notifies power line communication device 710. Then, power line communication device 710 issues a message to the three EV chargers 721, 722, and 724 with charging cars, providing 33A is to be dynamically allocated to the remaining three charging cars. In other words, the message instructs EV chargers 721, 722, and 724 to increase their current draw from 25A to 33A.

In the examples, the allocation of power is based on an evenly distributed principle. Preferably it is based on the first-in first-charged principle, a phase aware algorithm, or any algorithm. The advantage of this local dynamic load balancing for EV charging with power line communication is that it reduces the installation time and cost. It also in real-time allocates the available power to the charging cars without connecting to the cloud.

In an alternative embodiment, one of the EV chargers is assigned to be the power manager, and the power line communication device only provides the maximum current of the power lines and the real-time total current flowing to the EV chargers or the EV charger that is the power manager. An EV charger can include a processor, controller, or computer system, such as the computer system of Figure 1.

### System for communicating the real-time current available to EV chargers

Returning to Figure 7, a system for communicating the real-time current available to EV chargers is shown. This system includes power line communication device 710. Power line communication device 710 measures a total current flowing through one or more power lines providing power to *m* EV chargers 721-725. Power line communication device 710 establishes communications with one or more of *m* EV chargers 721-725 using one or more power lines 730 as the communications medium. The power line communication device 710 further may include a preset maximum current for one or more power lines 730.

The power line communication device 710 may further provide dynamic load balancing. For example, power line communication device 710 establishes communication with at least each of *n* chargers 721-722 of the *m* EV chargers 721-725, where *n* ≤ *m.* Power line communication device 710 further receives a request for power from *n* chargers 721-722. In other words, *n* chargers 721-722 are telling power line communication device 710 that they have cars to charge. Power line communication device 710 calculates a current for each of the *n* chargers from the total current, the preset maximum current, or both the total current and the preset maximum current. Finally, power line communication device 710 communicates a calculated current to each of *n* chargers 721-722.

Power line communication device 710 may calculate a current for each of *n* chargers 721-722 based on a first-in, first-charged principle.

Power line communication device 710 may calculate a current for each of *n* chargers 721-722 based on a phase aware algorithm.

Power line communication device 710 may calculate a current for each of *n* chargers 721-722 by evenly dividing the total current among *n* chargers 721-722.

A power managing EV charger may provide dynamic load balancing. For example, the power managing EV charger is EV Charger 721 of *m* EV chargers 721-725. Power line communication device 710 communicates the total current, the preset maximum current, or both the total current and the preset maximum current to power managing EV charger 721. Power managing EV charger 721 establishes communications with at least each of *n* chargers 722 of the m-1 chargers 722-725, where *n* ≤ *m-1,* using one or more power lines 730 as the communications medium. Power managing EV charger 721 further receives a request for power from n chargers 722. Power managing EV charger 721 calculates a current for each of *n* chargers 722 and power managing EV charger 721 from the total current, the preset maximum current, or both the total current and the preset maximum current. In this case, since EV chargers 721 and 722 both have cars requesting charging, a current is calculated for both chargers. Power managing EV charger 721 communicates a calculated current to each of *n* chargers 722. In this case, power managing EV charger 721 calculates a current for itself but does not need to communicate it across one or more power lines 730.

Similarly, as above, power managing EV charger 721 may calculate a current for each of *n* chargers 722 and power managing EV charger 721 based on a first-in, first-charged principle.

Power managing EV charger 721 may calculate a current for each of *n* chargers 722 and power managing EV charger 721 based on a phase aware algorithm.

Power managing EV charger 721 may calculate a current for each of *n* chargers 722 and power managing EV charger 721 by evenly dividing the total current among *n* chargers 721-722.

### Method for communicating the real-time current available to EV chargers

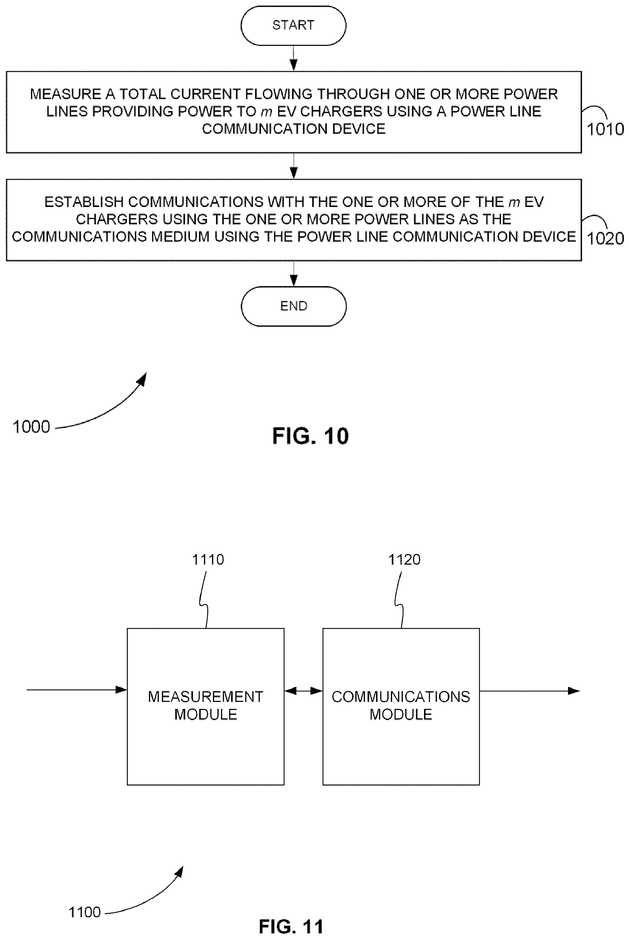

Figure 10 is a flowchart showing a method 1000 for communicating the real-time current available to EV chargers.

In step 1010 of method 1000, a total current flowing through one or more power lines providing power to *m* EV chargers is measured using a power line communication device.

In step 1020, communications are established with the one or more of the m EV chargers using the one or more power lines as the communications medium using the power line communication device.

### Computer program product for communicating the real-time current available

A computer program product may include a non-transitory tangible computer-readable storage medium whose contents include a program with instructions being executed on a processor so as to perform a method for communicating the real-time current available to EV chargers. The processor can be, but is not limited to, a controller, a computer, a microprocessor, the computer system of Figure 1, or any device capable of providing control signals and analyzing data. This method is performed by a system that includes one or more distinct software modules.

Figure 11 is a schematic diagram of a system 1100 that includes one or more distinct software modules and that performs a method for communicating the real-time current available to EV chargers. System 1100 includes measurement module 1110 and communications module 1120.

Measurement module 1110 measures a total current flowing through one or more power lines providing power to *m* EV chargers. Communications module 1120 establishes communications with the one or more of the *m* EV chargers using the one or more power lines as the communications medium.

While the present teachings are described in conjunction with various embodiments, it is not intended that the present teachings be limited to such embodiments. On the contrary, the present teachings encompass various alternatives, modifications, and equivalents, as will be appreciated by those of skill in the art.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims.

## Claims

1. A system (100, 1100) for communicating the real-time current available to electric vehicle (EV) chargers (721-725), comprising:
a power line communication device (710) that is configured to measure a total current flowing through one or more power lines (730) providing power to *m* EV chargers (721-725) and to establish communications with the one or more of the *m* EV chargers (721-725) using the one or more power lines (730) as the communications medium.

2. The system of claim 1, wherein the power line communication device (710) further includes a preset maximum current for the one or more power lines (730).

3. The system of claim 2, wherein the power line communication device (710) is configured
to establish communication with each of *n* chargers of the *m* EV chargers (721-725), where *n* ≤ *m,*
to receive a request for power from the n chargers,
to calculate a current for each of the n chargers from the total current, the preset maximum current, or both the total current and the preset maximum current, and
to communicate a calculated current to each of the n chargers.

4. The system of claim 3, wherein the power line communication device (710) is configured to calculate a current for each of the n chargers based on
a first-in, first-charged principle or
a phase aware algorithm.

5. The system of claim 3, wherein the power line communication device (710) is configured to calculate a current for each of the n chargers by evenly dividing the total current among the n chargers (721-725).

6. The system of claim 2, further comprising a power managing EV charger (721), wherein the power managing EV charger (721) is one of the *m* EV chargers (721-725),
wherein the power line communication device (710) is configured to communicate the total current, the preset maximum current, or both the total current and the preset maximum current to the power managing EV charger (721),
wherein the power managing EV charger (721) is configured
to establish communications with each *of n* chargers (722-725) of the *m-*1 chargers, where *n* ≤ *m-1,* using the one or more power lines (730) as the communications medium,
to receive a request for power from the n chargers (722-725),
to calculate a current for each of the n chargers (722-725) and the power managing EV charger (721) from the total current, the preset maximum current, or both the total current and the preset maximum current, and
to communicate a calculated current to each of the n chargers (722-725).

7. The system of claim 6,
wherein the power managing EV charger (721) is configured to calculate a current for each of the n chargers based on a first-in, first-charged principle, or
wherein the power managing EV charger is configured to calculate a current for each of the n chargers based on a phase aware algorithm, or
wherein the power managing EV charger (721) is configured to calculate a current for each of the *n* chargers by evenly dividing the total current among the *n* chargers.

8. A method for communicating the real-time current available to electric vehicle (EV) chargers (721-725), comprising:
measuring (1010) a total current flowing through one or more power lines (730) providing power to *m* EV chargers (721-725) using a power line communication device (710), and
establishing (1020) communications with the one or more of the *m* EV chargers (721-725) using the one or more power lines (730) as the communications medium using the power line communication device.

9. The method of claim 8, wherein
the power line communication device (710) establishes communication with each of *n* chargers of the *m* EV chargers (721-725), where *n* ≤ *m,*
the power line communication device (710) further receives a request for power from the n chargers,
the power line communication device (710) calculates a current for each of the *n* chargers from the total current, the preset maximum current, or both the total current and the preset maximum current, and
the power line communication device (710) communicates a calculated current to each of the n chargers.

10. The method of claim 9, wherein the power line communication device (710) calculates a current for each of the n chargers based
on a first-in, first-charged principle or
a phase aware algorithm.

11. The method of claim 9, wherein the power line communication device (710) calculates a current for each of the n chargers by evenly dividing the total current among the n chargers.

12. The method of claim 8, wherein
the *m* EV chargers (721-725) include a power managing EV charger (721),
the power line communication device (710) communicates the total current, a preset maximum current, or both the total current and the preset maximum current to the power managing EV charger (721),
the power managing EV charger (721) establishes communications with each of *n* chargers (722-725) of the m-1 EV chargers, where *n* ≤ *m-1,* using the one or more power lines as the communications medium,
the power managing EV charger (721) further receives a request for power from the n chargers (722-725),
the power managing EV charger (721) calculates a current for each of the *n* chargers (722-725) and the power managing EV charger (721) from the total current, the preset maximum current, or both the total current and the preset maximum current, and
the power managing EV charger (721) communicates a calculated current to each of the n chargers.

13. The method of claim 12, wherein the power managing EV charger (721) calculates a current for each of the n chargers based
on a first-in, first-charged principle or
a phase aware algorithm.

14. The method of claim 12, wherein the power managing EV charger (721) calculates a current for each of the n chargers by evenly dividing the total current among the n chargers.

15. A computer program product, comprising a non-transitory tangible computer-readable storage medium comprising instructions which, when executed by a processor, cause the processor to perform a method for communicating the real-time current available to electric vehicle (EV) chargers (721-725), comprising:
providing a system (1100), wherein the system comprises one or more distinct software modules, and wherein the distinct software modules comprise a measurement module (1110) and a communications module (1120);
measuring a total current flowing through one or more power lines (730) providing power to *m* EV chargers (721-725) using the measurement module (1110); and
establishing communications with the one or more of the *m* EV chargers (721-725) using the one or more power lines (730) as the communications medium using the communications module (1120).
